# EUROPÄISCHE PATENTANMELDUNG

(11) **EP 4 372 618 A1**
(43) Veröffentlichungstag der Anmeldung: **22.05.2024**
(21) Anmeldenummer: 23205093.0
(22) Anmeldetag: 23.10.2023
(51) Int. Cl.: G06N 3/045, G06V 10/82, G06N 20/00

(54) **VORRICHTUNG UND VERFAHREN ZUM KLASSIFIZIEREN VON OBJEKTEN MITTELS MASCHINELLEM LERNEN**

(30) Priorität: 15.11.2022 DE 102022130173
(71) Anmelder: STILL GmbH, 22113 Hamburg (DE)
(72) Erfinder: SCHÜTHE, Dennis, 21255 Tostedt (DE); ABEL, Bengt, 21335 Lüneburg (DE); RUDALL, Yan, 22453 Hamburg (DE); BAKR, Mohamed, 21073 Hamburg (DE)
(74) Vertreter: Patentship Patentanwaltgesellschaft

(57) **Zusammenfassung**

Die Erfindung betrifft eine Vorrichtung (100) sowie ein Verfahren zum Klassifizieren von Objekten mittels Maschinellem Lernen, ML, in einer Umgebung, insbesondere einem Warenlager. Die Vorrichtung (100) umfasst eine Sensoreinrichtung (120), welche ausgebildet ist, Sensordaten in der Umgebung zu erfassen. Die Vorrichtung (100) umfasst ferner eine Prozessoreinrichtung (110), welche ausgebildet ist, ein erstes ML-Modell und ein zweites ML-Modell zu betreiben, welches sich von dem ersten ML-Modell unterscheidet. Das erste ML-Modell ist ausgebildet, ein Objekt in der Umgebung auf der Grundlage eines Teils der Sensordaten zu klassifizieren, um ein erstes Klassifikationsergebnis zu erhalten. Das zweite ML-Modell ist ausgebildet, das Objekt in der Umgebung auf der Grundlage des Teils der Sensordaten zu klassifizieren, um ein zweites Klassifikationsergebnis zu erhalten. Die Prozessoreinrichtung (110) ist ferner ausgebildet, den Teil der Sensordaten in einem elektronischen Speicher (140) zu speichern, falls das erste Klassifikationsergebnis und das zweite Klassifikationsergebnis voneinander abweichen.

## Beschreibung

Die Erfindung betrifft eine Vorrichtung und ein Verfahren zum Klassifizieren von Objekten mittels Maschinellem Lernen in einer Umgebung, insbesondere einem Warenlager. Ferner betrifft die Erfindung ein Flurförderzeug oder einen Industrieroboter mit einer solchen Vorrichtung.

Um Modelle im Bereich des Maschinellen Lernens (ML) (im Englischen als "Machine Learning" bezeichnet) zur Klassifizierung von Objekten zu entwickeln und trainieren, bedarf es einer Vielzahl und Diversität von Sensordaten der Objekte. Je mehr Sensordaten aus unterschiedlichen Umgebungen bereitstehen, welche auf den gleichen Objekten basieren, wie beispielsweise Paletten in unterschiedlichen Warenlägern, um so effektiver und besser kann ein ML-Modell trainiert werden und somit im Einsatz besser die Objekte klassifizieren. Bei herkömmlichen Verfahren zur Sensordatenerfassung werden beispielsweise alle Sensordaten, die während einer Datenaufzeichnungsfahrt von Objekten erfasst werden, in der Regel auch gespeichert. Die Handhabung derartiger großer Datenmengen ist aufwändig und macht die Bereitstellung elektronischer Speicher mit ausreichender Speicherkapazität erforderlich.

Der vorliegenden Erfindung liegt die Aufgabe zugrunde, eine verbesserte Vorrichtung und ein verbessertes Verfahren zum Klassifizieren von Objekten mittels Maschinellem Lernen in einer Umgebung, insbesondere einem Warenlager bereitzustellen.

Diese Aufgabe wird gemäß einem ersten Aspekt der Erfindung gelöst durch eine Vorrichtung, insbesondere eine Datenverarbeitungsvorrichtung, zum Klassifizieren von Objekten mittels Maschinellem Lernen, ML, in einer Umgebung, insbesondere einem Warenlager. Die Vorrichtung umfasst eine Sensoreinrichtung, welche ausgebildet ist, Sensordaten, insbesondere einen Sensordatenstrom, in der Umgebung der Vorrichtung zu erfassen. Die Vorrichtung umfasst ferner eine Prozessoreinrichtung, welche ausgebildet ist, ein erstes ML-Modell, insbesondere künstliches neuronales Netzwerk, und ein zweites ML-Modell, insbesondere künstliches neuronales Netzwerk, zu betreiben, welches sich von dem ersten ML-Modell unterscheidet. Das erste ML-Modell ist ausgebildet ist, ein Objekt in der Umgebung auf der Grundlage eines Teils der Sensordaten zu klassifizieren, um ein erstes Klassifikationsergebnis zu erhalten. Das zweite ML-Modell ist ausgebildet, das Objekt in der Umgebung auf der Grundlage des Teils der Sensordaten zu klassifizieren, um ein zweites Klassifikationsergebnis zu erhalten. Die Prozessoreinrichtung ist ferner ausgebildet, den Teil der Sensordaten in einem elektronischen Speicher zu speichern, falls das erste Klassifikationsergebnis und das zweite Klassifikationsergebnis voneinander abweichen. Die erfindungsgemäße Vorrichtung ist somit ausgebildet, nicht alle Sensordaten zu speichern, sondern nur die Sensordaten zu speichern, die zu voneinander abweichenden Klassifikationsergebnissen führen. Hierdurch wird vorteilhafterweise die Datenmenge der gespeicherten Sensordaten reduziert und es werden gezielt die Sensordaten gespeichert, auf deren Grundlage sich das erste ML-Modell und das zweite ML-Modell nachtrainieren lassen, wodurch beispielsweise sogenannte Domain-Lücken (im Englischen Domain Gaps) gefüllt werden können.

Zur Erfassung der Sensordaten kann die Sensoreinrichtung beispielsweise eine oder mehrere Sensoreinheiten umfassen. Insbesondere kann die Sensoreinrichtung eine erste Sensoreinheit und eine zweite Sensoreinheit umfassen. Beispielsweise kann die erste Sensoreinheit erste Sensordaten eines ersten Sensordatentyps erfassen und kann die zweite Sensoreinheit zweite Sensordaten eines zweiten Sensordatentyps erfassen. Ist der erste Sensordatentyp unterschiedlich zu dem zweiten Sensordatentyp, dann können die Sensoreinheiten beispielsweise nahe beieinander angeordnet sein, insbesondere mit einem Abstand, der geringer als 5 cm ist. Ist der erste Sensordatentyp gleich zu dem zweiten Sensordatentyp, dann können die Sensoreinheiten beispielsweise beabstandet voneinander angeordnet sein, insbesondere mit einem Abstand, der größer als 5 cm ist. Entsprechend können beispielsweise weitere Sensoreinheiten zu der ersten Sensoreinheit und/oder zu der zweiten Sensoreinheit angeordnet sein. Sensoreinheiten mit unterschiedlichen Sensordatentypen können beispielsweise zueinander kalibriert sein, um die Sensordaten der Sensoreinrichtung zu erzeugen. Damit kann zur Erfassung der Sensordaten der Sensoreinrichtung auf eine Vielzahl von Sensoreinheiten der Vorrichtung zurückgegriffen werden.

In einer Ausführungsform unterscheidet sich das zweite ML-Modell von dem ersten ML-Modell dadurch, dass das erste ML-Modell und das zweite ML-Modell auf unterschiedlichen ML-Architekturen basieren. Damit können beispielsweise Trainingsdaten zum Nachtrainieren von sich noch nicht in der Praxis bewährten ML-Modellen, welche beispielsweise neue oder geänderte ML-Modellarchitekturen umfassen, generiert werden.

In einer Ausführungsform unterscheidet sich das zweite ML-Modell von dem ersten ML-Modell dadurch, dass das erste ML-Modell auf einem ersten Satz von Trainingsdaten basiert und das zweite ML-Modell auf einem zweiten Satz von Trainingsdaten basiert. Damit können beispielsweise auf unterschiedlichen Umgebungen trainierte ML-Modelle auf neue Umgebungen angepasst werden.

In einer Ausführungsform ist die Prozessoreinrichtung ferner ausgebildet, eine Vielzahl, d.h. zwei oder mehr weitere ML-Modelle zu betreiben. Jedes weitere ML-Modell unterscheidet sich von dem ersten ML-Modell, dem zweiten ML-Modell und den anderen weiteren ML-Modellen. Die Vielzahl von weiteren ML-Modellen kann ausgebildet sein, das Objekt in der Umgebung auf der Grundlage des Teils der Sensordaten zu klassifizieren, um eine Vielzahl weiterer Klassifikationsergebnisse zu erhalten. Damit kann beispielsweise eine Ermittlung einer Vielzahl unterschiedlicher Klassifikationsergebnisse bewirkt werden, auf deren Grundlage ein Gesamtklassifikationsergebnis erstellt werden kann.

In einer Ausführungsform ist die Prozessoreinrichtung ferner ausgebildet, den Teil der Sensordaten in dem elektronischen Speicher zu speichern, falls das erste Klassifikationsergebnis und das zweite Klassifikationsergebnis voneinander abweichen und die Zahl der von dem ersten Klassifikationsergebnis abweichenden weiteren Klassifikationsergebnisse größer als ein erster Schwellenwert ist. Beispielsweise kann die Vorrichtung ausgebildet sein, den Teil der Sensordaten zu speichern, falls z.B. mehr als 25% oder 50% der ML-Modelle zu einem anderen Klassifikationsergebnis als dem ersten Klassifikationsergebnis kommen. Damit können Mehrheitsentscheidungen der Vielzahl von ML-Modellen realisiert werden, um die Datenmenge der zu speichernden Sensordaten aufgrund effizienterer Selektion weiter zu reduzieren.

In einer Ausführungsform ist jedes ML-Modell ferner ausgebildet, einen Konfidenzwert für das entsprechende Klassifikationsergebnis zu bestimmen. Die Prozessoreinrichtung kann ausgebildet sein, auf der Grundlage des Konfidenzwertes des ersten Klassifikationsergebnisses, des Konfidenzwertes des zweiten Klassifikationsergebnisses und der Vielzahl von Konfidenzwerten der weiteren Klassifikationsergebnisse einen Gesamtkonfidenzwert zu bestimmen. Beispielsweise kann der Gesamtkonfidenzwert durch eine Multiplikation der einzelnen Konfidenzwerte bestimmt werden. Damit kann beispielsweise ein Vertrauensvotum der Vielzahl von ML-Modellen realisiert werden, um den zu speichernden Sensordaten eine Gewichtung zuzuweisen, welche beispielsweise durch eine Differenz oder Division zum Vertrauensvotum implementiert sein kann.

In einer Ausführungsform ist die Prozessoreinrichtung ferner ausgebildet, den Teil der Sensordaten in dem elektronischen Speicher zu speichern, falls das erste Klassifikationsergebnis und das zweite Klassifikationsergebnis voneinander abweichen, die Zahl der von dem ersten Klassifikationsergebnis abweichenden weiteren Klassifikationsergebnisse größer als ein erster Schwellenwert ist und der Gesamtkonfidenzwert größer als ein zweiter Schwellenwert ist. Damit kann eine Kombination von Vertrauensvotum und Mehrheitsvotum erreicht werden.

In einer Ausführungsform ist die Prozessoreinrichtung ferner ausgebildet, falls das erste Klassifikationsergebnis und das zweite Klassifikationsergebnis voneinander abweichen, das zweite ML-Modell auf der Grundlage des Teils der Sensordaten und des ersten Klassifikationsergebnisses nachzutrainieren. Damit kann das zweite ML-Modell durch die Prozessoreinrichtung der Vorrichtung angepasst werden, beispielsweise zeitnah im laufenden Betrieb des Warenlagers.

In einer Ausführungsform umfasst die Vorrichtung ferner den elektronischen Speicher zum Speichern des Teils der Sensordaten.

In einer Ausführungsform umfassen die Sensordaten Bilddaten und der Teil der Sensordaten umfasst ein Bild oder eine Bildsequenz der Bilddaten. Damit kann eine optische Erfassung der Umgebung bewirkt werden.

Die Aufgabe wird gemäß einem zweiten Aspekt der Erfindung gelöst durch ein Flurförderzeug oder einen mobilen Industrieroboter mit einer Vorrichtung gemäß dem ersten Aspekt.

Das Flurförderzeug oder der Industrieroboter gemäß dem zweiten Aspekt der Erfindung umfasst die Vorrichtung gemäß dem ersten Aspekt der Erfindung. Daher ergeben sich weitere möglichen Ausführungsformen des Flurförderzeugs oder des Industrieroboters gemäß dem zweiten Aspekt der Erfindung aus den vorstehend und nachstehend beschriebenen weiteren Ausführungsformen der Vorrichtung gemäß dem ersten Aspekt der Erfindung.

Die Aufgabe wird gemäß einem dritten Aspekt der Erfindung gelöst durch ein Verfahren zum Klassifizieren von Objekten mittels Maschinellem Lernen, ML, in einer Umgebung, insbesondere einem Warenlager. Das Verfahren umfasst die folgenden Schritte:
Erfassen von Sensordaten, insbesondere eines Sensordatenstroms, in der Umgebung;
Betreiben eines ersten ML-Modells, insbesondere künstlichen neuronalen Netzwerkes, und eines zweiten ML-Modells, insbesondere künstlichen neuronalen Netzwerkes, welches sich von dem ersten ML-Modell unterscheidet, wobei das erste ML-Modell ausgebildet ist, ein Objekt in der Umgebung auf der Grundlage eines Teils der Sensordaten zu klassifizieren, um ein erstes Klassifikationsergebnis zu erhalten, und wobei das zweite ML-Modell ausgebildet ist, das Objekt in der Umgebung auf der Grundlage des Teils der Sensordaten zu klassifizieren, um ein zweites Klassifikationsergebnis zu erhalten; und
Speichern des Teils der Sensordaten in einem elektronischen Speicher, falls das erste Klassifikationsergebnis und das zweite Klassifikationsergebnis voneinander abweichen.

Das Verfahren gemäß dem dritten Aspekt der Erfindung kann mittels der Vorrichtung gemäß dem ersten Aspekt der Erfindung durchgeführt werden. Daher ergeben sich weitere möglichen Ausführungsformen des Verfahrens gemäß dem dritten Aspekt der Erfindung aus den vorstehend und nachstehend beschriebenen weiteren Ausführungsformen der Vorrichtung gemäß dem ersten Aspekt der Erfindung.

Weitere Vorteile und Einzelheiten der Erfindung werden beispielhaft anhand der in den schematischen Figuren dargestellten Ausführungsbeispielen näher erläutert. Hierbei zeigt:
- Figur 1: eine schematische Darstellung einer Vorrichtung gemäß einer Ausführungsform zum Klassifizieren von Objekten mittels Maschinellem Lernen in einer Umgebung;
- Figur 2: eine schematische Darstellung eines Servers zur Kommunikation mit der in der Figur 1 dargestellten Vorrichtung;
- Figur 3: ein Flussdiagramm, welches Schritte eines Verfahrens zum Klassifizieren von Objekten mittels Maschinellem Lernen in einer Umgebung illustriert.

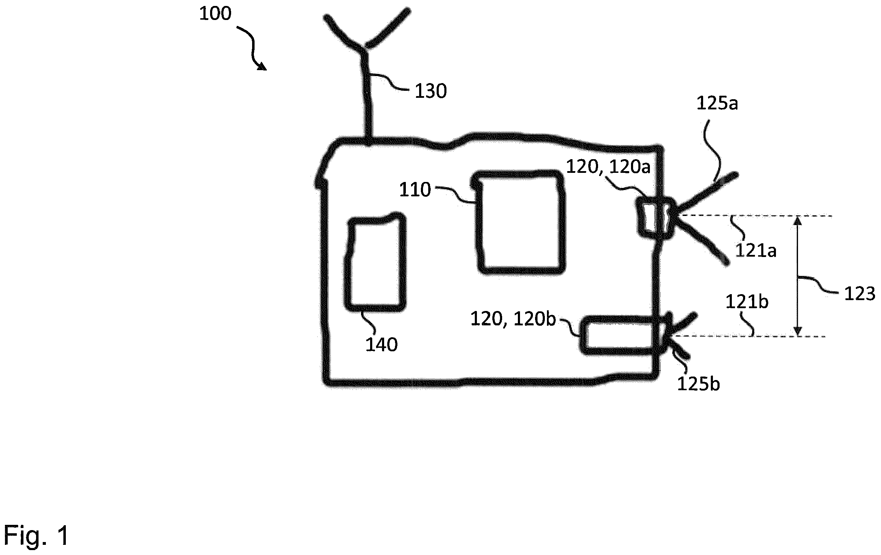

Figur 1 zeigt eine schematische Darstellung einer Vorrichtung 100, insbesondere Datenverarbeitungsvorrichtung 100, gemäß einer Ausführungsform zum Klassifizieren von Objekten mittels Maschinellem Lernen, ML, in einer Umgebung, insbesondere einem Warenlager. Die Vorrichtung 100 kann Teil eines Flurförderzeugs oder Industrieroboters sein.

Die Vorrichtung 100 umfasst eine Sensoreinrichtung 120, welche ausgebildet ist, Sensordaten, insbesondere einen Sensordatenstrom, in der Umgebung der Vorrichtung 100 zu erfassen. Wie in der Figur 1 dargestellt, kann die Sensoreinrichtung 120 eine erste Sensoreinheit 120a und eine zweite Sensoreinheit 120b umfassen. Auch wenn dies in der Figur 1 nicht dargestellt ist, kann die Sensoreinrichtung 120 noch eine oder mehrere weitere Sensoreinheiten umfassen. Die erste Sensoreinheit 120a kann gleich der zweiten Sensoreinheit 120b sein, d.h. beispielsweise Sensordaten des gleichen Sensordatentyps erfassen, oder unterschiedlich zu der zweiten Sensoreinheit 120b sein, d.h. beispielsweise Sensordaten eines unterschiedlichen Sensordatentyps erfassen. Beispielsweise können die eine weitere oder die mehrere weiteren Sensoreinheiten jeweils gleich oder unterschiedlich zueinander und/oder zu der ersten und/oder der zweiten Sensoreinheit sein. Unterschiedliche Sensoren können beispielsweise zueinander kalibriert sein, um die Sensordaten der Sensoreinrichtung 120 zu erzeugen. Die Sensordaten können Bilddaten umfassen und der Teil der Sensordaten kann ein Bild oder eine Bildsequenz umfassen.

Wie in der Figur 1 durch Sensoröffnungen der Sensoreinheiten 120a,b verlaufende Hilfsgeraden 121a-b dargestellt, können die Sensoreinheiten 120a,b einen spezifischen Sensorabstand 123 aufweisen. Bevorzugt ist der spezifische Sensorabstand bei gleichen Sensoreinheiten 120a,b relativ groß, insbesondere mindestens 5 cm. Bevorzugt liegen die unterschiedlichen Sensoreinheiten 120a,b nahe beieinander. Beispielsweise ist der spezifische Sensorabstand 123 bei unterschiedlichen Sensoreinheiten 120a,b relativ klein, insbesondere maximal 5 cm. Wie in der Figur 1 dargestellt, können die erste Sensoreinheit 120a und die zweite Sensoreinheit sich schneidende Sensorerfassungsbereiche 125a,b aufweisen. Der spezifische Sensorabstand 123 kann insbesondere derart vorbestimmt sein, dass durch die Sensorerfassungsbereiche 125a,b ein für die Erfassung der Objekte geeigneter Sensorüberlappungsbereich erzeugt wird.

Die Vorrichtung 100 umfasst ferner eine Prozessoreinrichtung 110 und kann ferner einen elektronischen, insbesondere nichtflüchtigen, Speicher 140 umfassen. Der elektronische Speicher 140 kann ausgebildet sein, Daten und ausführbaren Programmcode zu speichern, der, wenn von der Prozessoreinrichtung 110 der Vorrichtung 100 ausgeführt, die Prozessoreinrichtung 110 veranlasst, die im Folgenden beschriebenen Funktionen, Operationen und Verfahren durchzuführen.

Die Prozessoreinrichtung 110 ist ausgebildet, ein erstes ML-Modell, insbesondere künstliches neuronales Netzwerk, und ein zweites ML-Modell, insbesondere künstliches neuronales Netzwerk, zu betreiben, welches sich von dem ersten ML-Modell unterscheidet. Das zweite ML-Modell kann sich von dem ersten ML-Modell dadurch unterscheiden, dass das erste ML-Modell und das zweite ML-Modell auf unterschiedlichen ML-Architekturen basieren. Alternativ oder zusätzlich kann sich das zweite ML-Modell von dem ersten ML-Modell dadurch unterscheiden, dass das erste ML-Modell auf einem ersten Satz von Trainingsdaten basiert und das zweite ML-Modell auf einem zweiten Satz von Trainingsdaten basiert.

Das erste ML-Modell ist ausgebildet, ein Objekt in der Umgebung auf der Grundlage eines Teils der Sensordaten zu klassifizieren, um ein erstes Klassifikationsergebnis zu erhalten. Das zweite ML-Modell ist ausgebildet, das Objekt in der Umgebung auf der Grundlage des Teils der Sensordaten zu klassifizieren, um ein zweites Klassifikationsergebnis zu erhalten.

Die Prozessoreinrichtung 110 kann ferner ausgebildet sein, eine Vielzahl, d.h. zwei oder mehr, weitere ML-Modelle zu betreiben. Jedes weitere ML-Modell kann sich von dem ersten ML-Modell, dem zweiten ML-Modell und den anderen weiteren ML-Modellen unterscheiden. Die Vielzahl von weiteren ML-Modellen kann ausgebildet sein, das Objekt in der Umgebung auf der Grundlage des Teils der Sensordaten zu klassifizieren, um eine Vielzahl weiterer Klassifikationsergebnisse zu erhalten.

Die Prozessoreinrichtung 110 ist ferner ausgebildet, den Teil der Sensordaten in dem elektronischen Speicher 140 zu speichern, falls das erste Klassifikationsergebnis und das zweite Klassifikationsergebnis voneinander abweichen.

Die Prozessoreinrichtung 110 kann ferner ausgebildet sein, den Teil der Sensordaten in dem elektronischen Speicher 140 zu speichern, falls das erste Klassifikationsergebnis und das zweite Klassifikationsergebnis voneinander abweichen und die Zahl der von dem ersten Klassifikationsergebnis abweichenden weiteren Klassifikationsergebnisse größer als ein erster Schwellenwert ist. Beispielsweise können ab einem erster Schwellenwert von 25 Prozent der Summe der Anzahl der Klassifikationsergebnisse die klassifizierten Sensordaten gespeichert werden, womit insbesondere ein Mehrheitsvotum der ML-Modelle realisiert werden kann. Alternativ ist es möglich, dass der erste Schwellenwert bereits bei einer Abweichung eines Klassifikationsergebnisses überschritten wird.

Jedes ML-Modell kann ferner ausgebildet sein, einen Konfidenzwert für das entsprechende Klassifikationsergebnis zu bestimmen. Die Prozessoreinrichtung 110 kann ausgebildet sein, auf der Grundlage des Konfidenzwertes des ersten Klassifikationsergebnisses, des Konfidenzwertes des zweiten Klassifikationsergebnisses und der Vielzahl von Konfidenzwerten der weiteren Klassifikationsergebnisse einen Gesamtkonfidenzwert zu bestimmen. Die Prozessoreinrichtung 110 kann ferner ausgebildet sein, den Teil der Sensordaten in dem elektronischen Speicher 140 zu speichern, falls das erste Klassifikationsergebnis und das zweite Klassifikationsergebnis voneinander abweichen, die Zahl der von dem ersten Klassifikationsergebnis abweichenden weiteren Klassifikationsergebnisse größer als ein erster Schwellenwert ist und der Gesamtkonfidenzwert größer als ein zweiter Schwellenwert ist. Insbesondere kann der Konfidenzwert (auch als "Vertrauenswert" bezeichnet) jedes ML-Modells beispielsweise einem Wert zwischen Null und Eins entsprechen. Die Prozessoreinrichtung 110 kann dann beispielsweise durch eine Multiplikation der einzelnen Konfidenzwerte oder alternativ durch eine Addition der einzelnen Konfidenzwerte und Division durch die Gesamtzahl der Modelle, je nach Einsatzzweck, den Gesamtkonfidenzwert bilden. Damit kann insbesondere ein Vertrauensvotum der ML-Modelle realisiert werden. Der zweite Schwellenwert kann dabei beispielsweise einen Gesamtkonfidenzwert von 0,8 fordern, dies kann aber auch nach Situation und Anwendungsfall angepasst werden.

Die Prozessoreinrichtung 110 kann ferner ausgebildet sein, falls das erste Klassifikationsergebnis und das zweite Klassifikationsergebnis voneinander abweichen, das zweite ML-Modell auf der Grundlage des Teils der Sensordaten und des ersten Klassifikationsergebnisses nachzutrainieren. Insbesondere auch bei mehr als zwei Klassifikationsergebnissen kann dann somit beispielsweise das entsprechende abweichende ML-Modell optimiert werden.

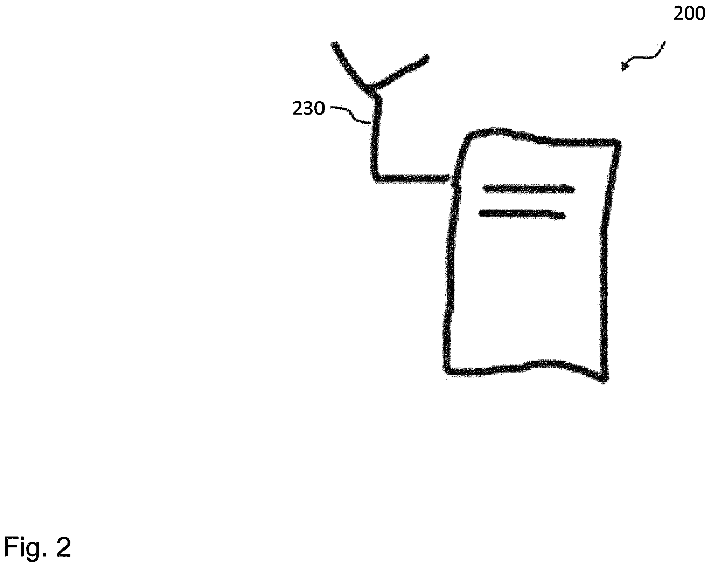

Wie in der Figur 1 weiter dargestellt, kann die Vorrichtung 100 eine Kommunikationseinrichtung 130 umfassen, um die Sensordaten zu einem in der Figur 2 dargestellten Server 200, insbesondere Cloud-Server 200, auszusenden. Der Server 200 kann eine weitere Kommunikationseinrichtung 230 umfassen, welche ausgebildet ist, die Sensordaten von der Vorrichtung 100 zu empfangen. Beispielsweise kann der Server 200 mit einer Vielzahl von Vorrichtungen 100 kommunizieren, um beispielsweise die Sensordaten der Vielzahl von ML-Modellen zu speichern und/oder die ML-Modelle der Vielzahl von Vorrichtungen 100 zu empfangen und/oder zu aktualisieren.

Somit kann der Lebenszyklus (im Englischen auch als "Life-Cycle") eines ML-Modells der Vorrichtung 100 beschleunigt werden und damit ferner auf sogenannte "domain gaps" reagiert werden, welche eine Lücke zwischen schon vorhandenen Trainingsdaten und der Nutzung des entsprechenden ML-Modells innerhalb unterschiedlicher Umgebungen zu Umgebungen anzeigt, in welchen das entsprechende ML-Modell nicht mehr oder nur noch mit geringem Konfidenzwert funktionsfähig ist.

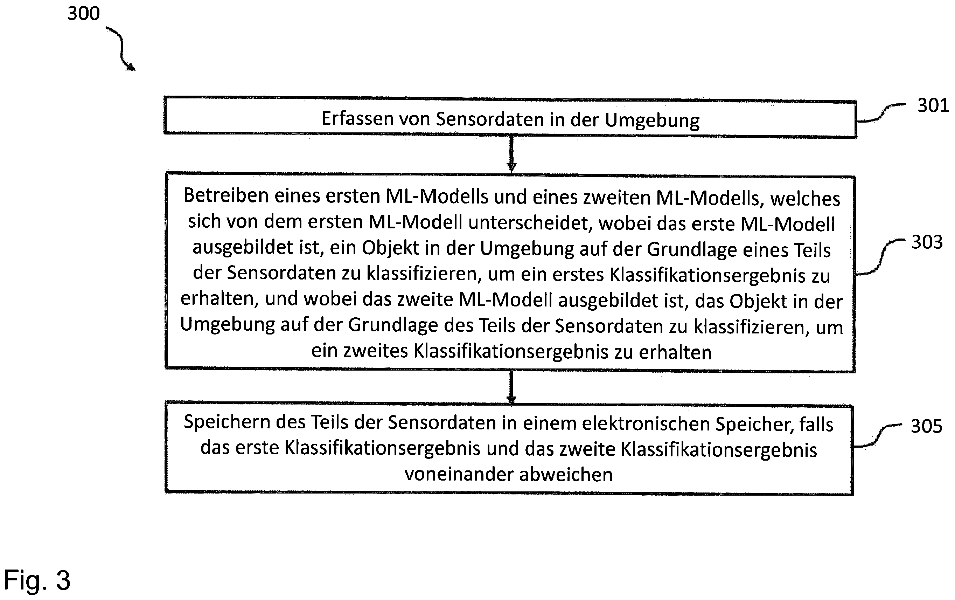

Figur 3 zeigt ein Flussdiagramm, welches Schritte eines Verfahrens 300 zum Klassifizieren von Objekten mittels Maschinellem Lernen, ML, in einer Umgebung, insbesondere einem Warenlager, umfasst.

Das Verfahren 300 umfasst einen Schritt 301 eines Erfassens von Sensordaten, insbesondere eines Sensordatenstroms, in der Umgebung.

Das Verfahren 300 umfasst ferner einen weiteren Schritt 303 eines Betreibens des ersten ML-Modells, insbesondere künstlichen neuronalen Netzwerkes, und des zweiten ML-Modells, insbesondere künstlichen neuronalen Netzwerkes, welches sich von dem ersten ML-Modell unterscheidet, wobei das erste ML-Modell ausgebildet ist, ein Objekt in der Umgebung auf der Grundlage eines Teils der Sensordaten zu klassifizieren, um ein erstes Klassifikationsergebnis zu erhalten, und wobei das zweite ML-Modell ausgebildet ist, das Objekt in der Umgebung auf der Grundlage des Teils der Sensordaten zu klassifizieren, um ein zweites Klassifikationsergebnis zu erhalten.

Das Verfahren 300 umfasst ferner einen weiteren Schritt 305 eines Speicherns des Teils der Sensordaten in dem elektronischen Speicher 140, falls das erste Klassifikationsergebnis und das zweite Klassifikationsergebnis voneinander abweichen.

Somit kann der Lebenszyklus (im Englischen auch als "Life-Cycle") eines ML-Verfahrens beschleunigt werden und damit ferner auf sogenannte "domain gaps" reagiert werden, welche eine Lücke zwischen schon vorhandenen Trainingsdaten und der Nutzung eines entsprechenden ML-Modells innerhalb unterschiedlicher Umgebungen zu Umgebungen anzeigt, in welchen das entsprechende ML-Modell nicht mehr oder nur noch mit geringem Konfidenzwert funktionsfähig ist.

## Patentansprüche

1. Vorrichtung (100) zum Klassifizieren von Objekten mittels Maschinellem Lernen, ML, in einer Umgebung, insbesondere einem Warenlager, wobei die Vorrichtung (100) umfasst:
eine Sensoreinrichtung (120), welche ausgebildet ist, Sensordaten in der Umgebung zu erfassen, und
eine Prozessoreinrichtung (110), welche ausgebildet ist, ein erstes ML-Modell und ein zweites ML-Modell zu betreiben, welches sich von dem ersten ML-Modell unterscheidet, wobei das erste ML-Modell ausgebildet ist, ein Objekt in der Umgebung auf der Grundlage eines Teils der Sensordaten zu klassifizieren, um ein erstes Klassifikationsergebnis zu erhalten, und wobei das zweite ML-Modell ausgebildet ist, das Objekt in der Umgebung auf der Grundlage des Teils der Sensordaten zu klassifizieren, um ein zweites Klassifikationsergebnis zu erhalten;
wobei die Prozessoreinrichtung (110) ferner ausgebildet ist, den Teil der Sensordaten in einem elektronischen Speicher (140) zu speichern, falls das erste Klassifikationsergebnis und das zweite Klassifikationsergebnis voneinander abweichen.

2. Vorrichtung (100) nach Anspruch 1, wobei sich das zweite ML-Modell von dem ersten ML-Modell dadurch unterscheidet, dass das erste ML-Modell und das zweite ML-Modell auf unterschiedlichen ML-Architekturen basieren.

3. Vorrichtung (100) nach Anspruch 1 oder 2, wobei sich das zweite ML-Modell von dem ersten ML-Modell dadurch unterscheidet, dass das erste ML-Modell auf einem ersten Satz von Trainingsdaten basiert und das zweite ML-Modell auf einem zweiten Satz von Trainingsdaten basiert.

4. Vorrichtung (100) nach einem der vorhergehenden Ansprüche, wobei die Prozessoreinrichtung (110) ferner ausgebildet ist, eine Vielzahl weitere ML-Modelle zu betreiben, wobei sich jedes weitere ML-Modell von dem ersten ML-Modell, dem zweiten ML-Modell und den anderen weiteren ML-Modellen unterscheidet, wobei die Vielzahl von weiteren ML-Modellen ausgebildet ist, das Objekt in der Umgebung auf der Grundlage des Teils der Sensordaten zu klassifizieren, um eine Vielzahl weiterer Klassifikationsergebnisse zu erhalten.

5. Vorrichtung (100) nach Anspruch 4, wobei die Prozessoreinrichtung (110) ferner ausgebildet ist, den Teil der Sensordaten in dem elektronischen Speicher (140) zu speichern, falls das erste Klassifikationsergebnis und das zweite Klassifikationsergebnis voneinander abweichen und die Zahl der von dem ersten Klassifikationsergebnis abweichenden weiteren Klassifikationsergebnisse größer als ein erster Schwellenwert ist.

6. Vorrichtung (100) nach Anspruch 4 oder 5, wobei jedes ML-Modell ferner ausgebildet ist, einen Konfidenzwert für das entsprechende Klassifikationsergebnis zu bestimmen, und wobei die Prozessoreinrichtung (110) ausgebildet ist, auf der Grundlage des Konfidenzwertes des ersten Klassifikationsergebnisses, des Konfidenzwertes des zweiten Klassifikationsergebnisses und der Vielzahl von Konfidenzwerten der weiteren Klassifikationsergebnisse einen Gesamtkonfidenzwert zu bestimmen.

7. Vorrichtung (100) nach Anspruch 6, wobei die Prozessoreinrichtung (110) ferner ausgebildet ist, den Teil der Sensordaten in dem elektronischen Speicher (140) zu speichern, falls das erste Klassifikationsergebnis und das zweite Klassifikationsergebnis voneinander abweichen, die Zahl der von dem ersten Klassifikationsergebnis abweichenden weiteren Klassifikationsergebnisse größer als ein erster Schwellenwert ist und der Gesamtkonfidenzwert größer als ein zweiter Schwellenwert ist.

8. Vorrichtung (100) nach einem der vorhergehenden Ansprüche, wobei die Prozessoreinrichtung (110) ferner ausgebildet ist, falls das erste Klassifikationsergebnis und das zweite Klassifikationsergebnis voneinander abweichen, das zweite ML-Modell auf der Grundlage des Teils der Sensordaten und des ersten Klassifikationsergebnisses nachzutrainieren.

9. Vorrichtung (100) nach einem der vorhergehenden Ansprüche, wobei die Vorrichtung (100) ferner den elektronischen Speicher (140) zum Speichern des Teils der Sensordaten umfasst.

10. Vorrichtung (100) nach einem der vorhergehenden Ansprüche, wobei die Sensordaten Bilddaten umfassen und der Teil der Sensordaten ein Bild oder eine Bildsequenz umfasst.

11. Flurförderzeug oder mobiler Industrieroboter mit einer Vorrichtung (100) nach einem der vorhergehenden Ansprüche.

12. Verfahren (300) zum Klassifizieren von Objekten mittels Maschinellem Lernen, ML, in einer Umgebung, insbesondere einem Warenlager, wobei das Verfahren (300) umfasst:
Erfassen (301) von Sensordaten in der Umgebung;
Betreiben (303) eines ersten ML-Modells und eines zweiten ML-Modells, welches sich von dem ersten ML-Modell unterscheidet, wobei das erste ML-Modell ausgebildet ist, ein Objekt in der Umgebung auf der Grundlage eines Teils der Sensordaten zu klassifizieren, um ein erstes Klassifikationsergebnis zu erhalten, und wobei das zweite ML-Modell ausgebildet ist, das Objekt in der Umgebung auf der Grundlage des Teils der Sensordaten zu klassifizieren, um ein zweites Klassifikationsergebnis zu erhalten; und
Speichern (305) des Teils der Sensordaten in einem elektronischen Speicher (140), falls das erste Klassifikationsergebnis und das zweite Klassifikationsergebnis voneinander abweichen.
